**Europäisches Patentamt**

**European Patent Office**

**Office européen des brevets**

(11) Numéro de publication : **0 477 062 A1**

(12)

# DEMANDE DE BREVET EUROPEEN

(21) Numéro de dépôt : **91402381.7**

(51) Int. Cl.⁵ : **F16H 63/32**

(22) Date de dépôt : **05.09.91**

(30) Priorité : **05.09.90 FR 9011026**

(43) Date de publication de la demande :
**25.03.92 Bulletin 92/13**

(84) Etats contractants désignés :
**BE DE ES GB IT NL SE**

(71) Demandeur : **BRONZE ACIOR S.A.**
**F-27750 La Couture-Boussey (FR)**

(72) Inventeur : **Bricaud, Michel**
**26, rue Henri IV**
**F-27540 Ivry la Bataille (FR)**

(74) Mandataire : **Leszczynski, André et al**
**CABINET NONY & CIE. 29 rue Cambacérès**
**F-75008 Paris (FR)**

(54) **Fourchette de boîte de vitesses de véhicule automobile.**

(57)    L'invention est relative à une fourchette de boîte de vitesses comportant une patte comprenant un évidement constituant une encoche pour l'engagement d'un doigt de commande et des patins agissant sur des pignons baladeurs.
Elle comporte un dépôt électrolytique de métal dur au moins au niveau de l'encoche (6) de réception du doigt de commande (4) et des patins (8).

EP 0 477 062 A1

Jouve, 18, rue Saint-Denis, 75001 PARIS

FIG.1

La présente invention est relative à une fourchette de boîte de vitesses de véhicule automobile et à son procédé de réalisation.

Les boîtes de vitesses de type mécanique comportent habituellement un arbre primaire solidaire du moteur par l'intermédiaire de l'embrayage et un arbre secondaire relié aux roues motrices. L'arbre primaire porte un pignon en prise avec un engrenage d'un arbre intermédiaire disposé en parallèle à l'arbre principal et l'arbre secondaire, ledit arbre intermédiaire portant autant d'engrenages que de combinaisons voulues pour la boîte de vitesses. L'arbre secondaire est muni de couronnes ou pignons dits "baladeurs" qui peuvent coulisser le long de l'arbre tout en restant entraînés par lui au moyen de cannelures.

Par action sur le levier de changement de vitesses, on sélectionne le baladeur correspondant au rapport de vitesses souhaité, ce baladeur étant alors verrouillé sur un engrenage de l'arbre intermédiaire assurant la prise avec l'arbre moteur.

Cette sélection du baladeur s'effectue par l'intermédiaire de pièces dites "fourchettes" mobiles axialement le long d'un arbre parallèle aux arbres portant les pignons de la boîte de vitesses sous l'action d'un doigt de commande solidaire d'un arbre pivotant sous l'action du levier de changement de vitesses.

Pour la manoeuvre de la fourchette, le doigt de commande s'engage dans une encoche, généralement de section rectangulaire, constituée par un évidement d'une patte en forme de U en saillie du corps de la fourchette.

Les fourchettes doivent présenter une bonne élasticité associée à des allongement importants pour éviter la casse en fonctionnement et assurer de bonnes propriétés de frottement. Pour cela, dans les véhicules modernes, les fourchettes sont réalisées le plus souvent en des alliages métalliques de dureté relativement faible tels que des cupro-alliages, notamment des alliages cuivre/aluminium.

Ainsi, on utilise couramment des alliages ayant la composition suivante (pourcentage en poids) :
- Aluminium      9,7 - 10,2
- Fer               2,7 - 3,4
- Nickel          < 0,2

Le reste étant constitué par du cuivre et des impuretés inévitables.

De tels cupro-alliages présentent une dureté généralement inférieure à 200 HB. On constate en fonctionnement des fourchettes réalisées en ces alliages une usure, notamment au niveau de la zone de l'encoche recevant le doigt de commande, ainsi qu'au niveau des patins.

Il est connu par exemple par JP-A-57 079534 ou JP-A-59 229631 de réaliser un revêtement de métal dur au niveau des patins.

Il est par ailleurs connu d'après FR-A-26 40770 de la Société déposante de mettre en place un insert de matériau dur au niveau de l'encoche de réception du doigt de commande.

La présente invention se propose de réaliser une fourchette qui par mise en oeuvre d'un traitement simple en cours de fabrication présente des caractéristiques voulues de dureté au niveau des zones où une usure par frottement ou du fait de chocs peut se produire, notamment au niveau des patins et respectivement du doigt de commande.

La présente invention a pour objet une fourchette de boîte de vitesses essentiellement caractérisée par le fait qu'elle comporte un revêtement, réalisé de préférence par dépôt électrolytique, de métal dur tel que du molybdène ou du chrome, sur la surface de l'encoche de réception du doigt de commande, ledit revêtement étant de préférence réalisé sur toute la surface externe de la fourchette. Le traitement global de la fourchette est avantageux car il permet d'éviter de mettre en place des masques pour empêcher localement un dépôt du métal de revêtement.

La présente invention s'applique aux fourchettes de boîtes de vitesses réalisées en toutes matières et notamment en acier, en fonte, en alliage de cuivre, en matière plastique conductrice ou rendue conductrice par exemple par un premier dépôt par exemple métallique et avantageusement en alliage contenant du cuivre et de l'aluminium.

Selon l'invention, on réduit l'usure mécanique au niveau des patins et confère une excellente résistance aux chocs du doigt au niveau de l'encoche d'une fourchette de boîte de vitesses. Ainsi, un traitement unique simplifié permet de prolonger la vie des fourchettes des boîtes de vitesses, même pour des utilisations dans les conditions extrêmes de voitures sportives ou en utilisation tous terrains des véhicules de types 4X4.

L'invention sera mieux comprise au moyen de la description ci-après et des figures annexées données comme des exemples non limitatifs parmi lesquels :

– La figure 1 est une vue en perspective schématique illustrant le fonctionnement de la fourchette selon l'invention ;

– La figure 2 est une vue schématique d'un dispositif d'électrolyse en vue d'un dépôt d'une couche de métal dur selon la présente invention.

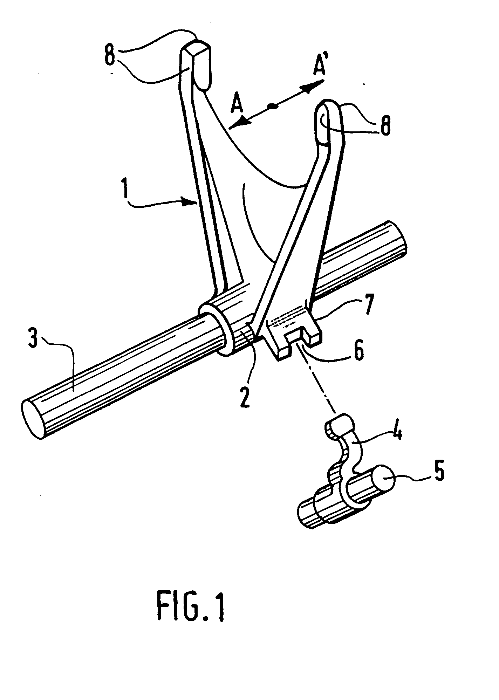

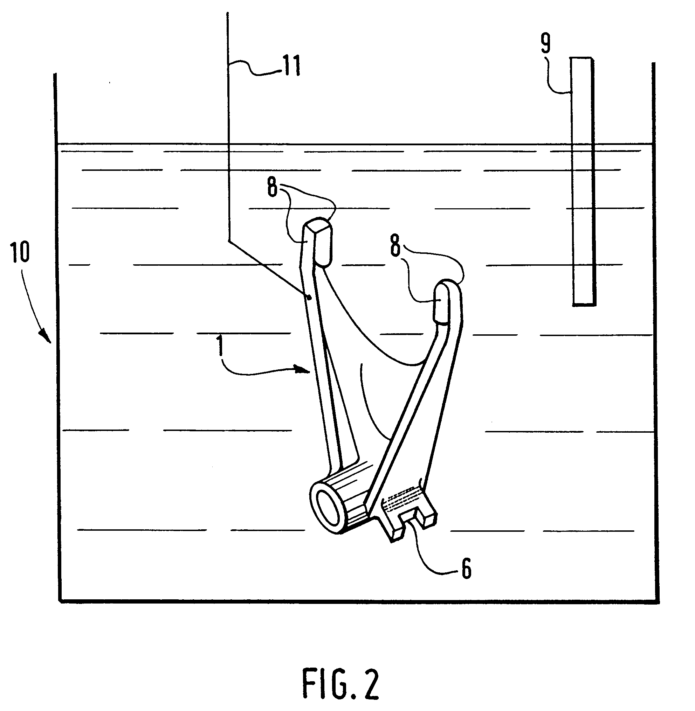

Sur les figures 1 et 2, on a utilisé les mêmes références pour désigner les mêmes éléments.

3

En se référant au dessin on voit sur la figure 1 une fourchette de boîte de vitesses désignée globalement par 1 et généralement montée coulissante par une partie en forme de douille 2 sur un arbre de guidage 3.

Le déplacement de la fourchette le long de l'arbre 3 est schématisé par les flèches A, A′ sur la figure 1.

Pour l'entraînement de la fourchette, il est prévu un doigt de commande 4 monté solidaire en rotation d'un arbre 5, le déplacement de l'arbre 5 étant commandé par le levier de changement de vitesse. L'extrémité en olive du doigt 4 s'engage, en vue de réaliser le déplacement de la fourchette, dans une encoche 6 constituée par un évidement d'une patte 7 sensiblement en forme de U en saillie du corps de la fourchette.

L'encoche 6 subit des chocs répétés du levier du doigt de manoeuvre 4.

Les patins 8 s'usent, à cause du frottement lors du contact avec les pièces qu'ils mettent en mouvement.

Sur la figure 2, on peut voir schématisée, une fourchette de boîte de vitesses 1 plongée dans un bac d'électrolyse 10. La fourchette 1 est connectée par un conducteur 11 au pôle négatif d'une alimentation électrique, non représentée. Une électrode 9 plongée dans le bac 10 est reliée au pôle positif de la même alimentation électrique. Ainsi, la fourchette 1 forme la cathode, ou une partie de la cathode, l'électrode 9 formant l'anode. L'établissement du courant électrique provoque le dépôt sensiblement uniforme sur la surface externe de la fourchette 1 de métal dur, avantageusement du chrome. Le dépôt de chrome a par exemple une épaisseur comprise entre 5 et 60 μm, avantageusement comprise entre 10 et 40 μm, typiquement 10 μm. Le dépôt s'effectue notamment au niveau des patins 8 auxquels il va conférer une excellente résistance à l'usure et au niveau de l'encoche 6 à laquelle il va conférer une excellente résistance aux chocs.

Dans un exemple avantageux, on a effectué un dépôt de 25 μm de chrome sur toute la surface externe d'une fourchette 1 réalisée en un alliage ayant la composition suivante en pourcentage en poids :

- Cuivre      87 %
- Aluminium   10 %
- Fer        3 %

et obtenue par moulage en coquille métallique.

On a constaté une excellente adhérence du revêtement de chrome à la fourchette et une résistance améliorée de la fourchette à l'usure et aux chocs.


**Revendications**

1.   Fourchette de boîte de vitesses comportant une patte comprenant un évidement constituant une encoche pour l'engagement d'un doigt de commande et des patins agissant sur des pignons baladeurs, ledits patins comportant un revêtement de métal dur, caractérisée par le fait qu'elle comporte un revêtement de métal dur sur la surface de l'encoche (6) de réception du doigt de commande (4)

2.   Fourchette de boîte de vitesses selon la revendication 1, caractérisée par le fait que le revêtement de métal dur sur la surface de l'encoche (6) et sur les patins (8) est réalisé par dépôt électrolytique.

3.   Fourchette de boîte de vitesses selon la revendication 2, caractérisée par le fait qu'elle comporte un revêtement réalisé par dépôt électrolytique de métal dur sur toute sa surface externe.

4.   Fourchette de boîte de vitesses selon l'une quelconque des revendications 1 à 3, caractérisée par le fait que l'épaisseur du revêtement de métal dur est comprise entre 5 et 60 μm.

5.   Fourchette de boîte de vitesses selon la revendication 3, caractérisée par le fait que l'épaisseur du revêtement de métal dur est comprise entre 10 et 40 μm.

6.   Fourchette de boîte de vitesses selon l'une quelconque des revendications précédentes, caractérisée par le fait que le revêtement de métal dur est un revêtement de chrome.

7.   Procédé de réalisation de fourchette de boîte de vitesses, caractérisé par le fait qu'il comporte une étape consistant à réaliser, de préférence par dépôt électrolytique, un revêtement de métal dur sur la surface de l'encoche (6) de réception de doigt de commande (4) et sur les patins de manoeuvre (8).

8.   Procédé selon la revendication 7, caractérisé par le fait que l'on réalise ledit revêtement par un dépôt électrolytique uniforme de métal dur sur toute la surface externe de la fourchette (1).

FIG.1

FIG.2

EP 0 477 062 A1

Office européen
des brevets

# RAPPORT DE RECHERCHE EUROPEENNE

Numero de la demande

EP    91 40 2381

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | FR-A-2 640 777 (BRONZE ACIOR)<br>* abrégé; figure 1 * | 1-5,7,8 | F16H63/32 |
| Y | PATENT ABSTRACTS OF JAPAN<br>vol. 5, no. 064 (P-059)30 Avril 1981<br>& JP-A-56 016 218 ( KYOWA GOKIN ) 17 Février 1981<br>* abrégé * | 1-5,7,8 | |
| A,D | PATENT ABSTRACTS OF JAPAN<br>vol. 6, no. 162 (P-137)(1040) 25 Août 1982<br>& JP-A-57 079 534 ( TOYOTA MOTOR ) 18 Mai 1982<br>* abrégé * | 1-8 | |
| A | PATENT ABSTRACTS OF JAPAN<br>vol. 9, no. 105 (P-354)(1828) 9 Mai 1985<br>& JP-A-59 229 631 ( HITACHI KINZOKU ) 24 Décembre 1984<br>* abrégé * | 1-5,7 | |

DOMAINES TECHNIQUES RECHERCHES (Int. Cl.5 )

F16H
G05G

Le présent rapport a été établi pour toutes les revendications

| Lieu de la recherche | Date d'achèvement de la recherche | Examinateur |
|---|---|---|
| LA HAYE | 02 JANVIER 1992 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)